# EUROPÄISCHE PATENTANMELDUNG

(11) **EP 3 791 769 A1**
(43) Veröffentlichungstag der Anmeldung: **17.03.2021**
(21) Anmeldenummer: 20195391.6
(22) Anmeldetag: 10.09.2020
(51) Int. Cl.: A47L 15/42, D06F 37/26, F16K 15/14, F16K 17/02

(54) **DRUCKAUSGLEICHSEINRICHTUNG FÜR EIN REINIGUNGSGERÄT UND REINIGUNGSGERÄT**

(30) Priorität: 12.09.2019 DE 102019124499
(71) Anmelder: Miele & Cie. KG, 33332 Gütersloh (DE)
(72) Erfinder: Jostes, Dirk, 33602 Bielefeld (DE); Werner, Alexander, 33619 Bielefeld (DE)

(57) **Zusammenfassung**

Die Erfindung betrifft eine Druckausgleichseinrichtung (105) für ein Reinigungsgerät, wobei die Druckausgleichseinrichtung (105) ein Adapterelement (205) mit zumindest einer Luftöffnung (220) aufweist. Dabei ist das Adapterelement (205) in eine Entlüftungsöffnung (215) eines Spülraumes (110) des Reinigungsgeräts eingesetzt oder einsetzbar. Weiterhin weist die Druckausgleichseinrichtung (105) ein Ventil (210) auf, das mit dem Adapterelement (205) gekoppelt oder koppelbar ist, und ausgeformt ist, um die zumindest eine Luftöffnung (220) in einer Öffnungsposition zu öffnen und zusätzlich oder alternativ in einer Ruheposition (200) zu schließen.

## Beschreibung

Die Erfindung betrifft eine Druckausgleichseinrichtung für ein Reinigungsgerät sowie ein Reinigungsgerät.

Die DE 10 2011 112 576 A1 beschreibt ein Druckausgleichselement, ein Gerät mit Druckausgleichselement und ein Verfahren zum Druckausgleich.

Der Erfindung stellt sich daher die Aufgabe, eine verbesserte Druckausgleichseinrichtung für ein Reinigungsgerät sowie ein verbessertes Reinigungsgerät zu schaffen.

Erfindungsgemäß wird diese Aufgabe durch eine Druckausgleichseinrichtung für ein Reinigungsgerät sowie ein Reinigungsgerät mit den Merkmalen der Hauptansprüche gelöst. Vorteilhafte Ausgestaltungen und Weiterbildungen der Erfindung ergeben sich aus den nachfolgenden Unteransprüchen.

Die mit der Erfindung erreichbaren Vorteile bestehen neben einem Reduzieren von ungewolltem Spülflottenaustritt beispielsweise in einem Vermeiden von Fehlfunktionen des Reinigungsgeräts.

Daher wird eine Druckausgleichseinrichtung für ein Reinigungsgerät vorgestellt, die ein Adapterelement mit zumindest einer Luftöffnung aufweist. Dabei ist das Adapterelement in eine Entlüftungsöffnung eines Spülraumes des Reinigungsgeräts eingesetzt oder einsetzbar. Weiterhin weist die Druckausgleichseinrichtung ein Ventil auf, das mit dem Adapterelement gekoppelt oder koppelbar ist, und ausgeformt ist, um die zumindest eine Luftöffnung in einer Öffnungsposition zu öffnen und zusätzlich oder alternativ in einer Ruheposition zu schließen.

Die Druckausgleichseinrichtung kann beispielsweise in einem Reinigungsgerät eingesetzt werden, das ausgeformt ist, um zu reinigendes Reinigungsgut in dem Spülraum zu reinigen. Das Reinigungsgerät kann dabei beispielsweise als eine handelsübliche Spülmaschine oder als eine Waschmaschine realisiert sein, die idealerweise über eine Trocknungsfunktion oder zumindest ein Gebläse verfügt. Das Reinigungsgerät kann dabei die Druckausgleichseinrichtung aufweisen, die ausgebildet ist, um einen Druckausgleich durchzuführen. Die Druckausgleichseinrichtung kann beispielsweise an der Entlüftungsöffnung im Spülraum angeordnet sein. Die Entlüftungsöffnung kann beispielsweise als Durchgangsöffnung realisiert sein. Das Adapterelement kann beispielsweise als ein Verbindungsstück ausgeformt sein, durch das vorteilhafterweise verschiedenartige Anschlüsse und zusätzlich oder alternativ Öffnungen miteinander verbunden werden können. Das Adapterelement weist die Luftöffnung auf, die beispielsweise als eine Durchgangsöffnung realisiert sein kann. In der Öffnungsposition des Ventils kann beispielsweise eine Luftmenge ausströmen, die andernfalls in der Ruheposition des Ventils beispielsweise in dem Spülraum gehalten werden kann. Vorteilhafterweise kann ein Fehlfunktionsrisiko des Reinigungsgeräts auf diese Weise reduziert werden.

Gemäß einer Ausführungsform kann das Adapterelement eine Montageöffnung aufweisen, die ausgebildet sein kann, um das Ventil aufzunehmen. Die Montageöffnung kann sich beispielsweise zumindest teilweise durch eine kanalförmige Führungshülse in dem Adapterelement erstreckend ausgeformt sein, wobei die Führungshülse zentral oder mittig an dem Adapterelement angeordnet sein kann. Die Luftöffnung kann neben der Montageöffnung angeordnet sein. Vorteilhafterweise kann durch die zentrale Anordnung der Montageöffnung eine Stabilität des Adapterelements durch ein gleichmäßiges Ausströmen einer Luftmenge beispielsweise um die Montageöffnung herum sichergestellt werden.

Gemäß einer Ausführungsform kann das Ventil ein Anschlusselement aufweisen, das in die Montageöffnung einsteckbar ausgeformt sein kann. Zusätzlich oder alternativ kann das Ventil ein Abdeckelement aufweisen, das ausgeformt sein kann, um in der Ruheposition des Ventils die Luftöffnung abzudecken und zusätzlich oder alternativ um in der Öffnungsposition des Ventils die Luftöffnung zu öffnen. Das Anschlusselement kann beispielsweise stabförmig ausgeformt sein und zusätzlich oder alternativ eine Verdickung aufweisen, um vorteilhafterweise in der Montageöffnung fixiert zu werden. Das Abdeckelement kann beispielsweise an einem freien Ende des Anschlusselements angeordnet sein und kann tellerförmig realisiert sein. Vorteilhafterweise kann durch die Ausformung des Abdeckelements ein Ausströmen einer Luftmenge aus dem Spülraum oder ein Einströmen einer Luftmenge in den Spülraum verhindert werden, sofern sich das Abdeckelement in der Ruheposition befindet, sodass es vorteilhafterweise weder zu Verunreinigungen innerhalb des Spülraumes und zusätzlich oder alternativ zu einem unausgeglichenen Druckverhältnis kommen kann.

Das Abdeckelement des Ventils kann elastisch ausgeformt sein. Das bedeutet, dass beispielsweise ein Material, aus dem das Ventil ausgeformt sein kann, eine elastische Eigenschaft aufweist, sodass eine Form des Ventils vorteilhafterweise nach einem Wechsel von der Ruheposition in die Öffnungsposition erneut in die Ruheposition zurückspringen kann. Das bedeutet ebenfalls, dass das Abdeckelement des Ventils beispielsweise elastisch ausgeformt sein kann, auch wenn das Anschlusselement fest ist, sodass beispielsweise in der Öffnungsposition das Abdeckelement umgestülpt werden kann. Alternativ kann beispielsweise das Anschlusselement einen elastischen Teil aufweisen, sodass das Abdeckelement fest ausgeformt ist.

Gemäß einer Ausführungsform kann das Adapterelement wannenförmig ausgeformt sein. Das bedeutet, dass das Adapterelement in einem an dem Reinigungsgerät montierten Zustand auf einer dem Spülraum abgewandten Fläche in eine von dem Spülraum abgewandte Richtung gewölbt sein kann. Vorteilhafterweise kann das Adapterelement dadurch eine Luftmenge zu der Luftöffnung leiten.

Das Adapterelement kann weiterhin zumindest eine weitere Luftöffnung aufweisen. Dabei kann das Ventil ausgeformt sein, um die zumindest eine weitere Luftöffnung in der Öffnungsposition zu öffnen und zusätzlich oder alternativ in der Ruheposition zu schließen. Die Luftöffnung und die weitere Luftöffnung können beispielsweise radial um die Montageöffnung angeordnet sein, sodass sie vorteilhafterweise von dem Abdeckelement abdeckbar angeordnet sind. Durch zwei oder sogar mehr derartiger Luftöffnungen kann in der Öffnungsposition des Ventils vorteilhafterweise mehr Luft durch die Druckausgleichseinrichtung entweichen.

Gemäß einer Ausführungsform kann das Adapterelement zumindest einen Haltearm aufweisen, der ausgebildet sein kann, um das Adapterelement an der Entlüftungsöffnung zu halten. Der Haltearm kann dabei an einer anderen Seite des Adapterelements ausgeformt sein als die Lüftöffnung und zusätzlich oder alternativ die weitere Luftöffnung. Beispielsweise kann sich der Haltearm von einer Außenseite einer Wannenwand des wannenförmigen Adapterelements weg erstrecken und im montierten Zustand des Adapterelements in der Entlüftungsöffnung an einem Rand um die Entlüftungsöffnung anliegen. Das Adapterelement kann auch mehrere solcher Haltearme aufweisen, die im montierten Zustand des Adapterelements in der Entlüftungsöffnung an mehreren Randabschnitten des Rands oder umlaufend an dem Rand um die Entlüftungsöffnung anliegen können. Vorteilhafterweise kann durch den Haltearm das Adapterelement sicher an der Entlüftungsöffnung gehalten werden. Auch kann durch einen oder mehrere derartiger Haltearme formschlüssig verhindert werden, dass die komplette Druckausgleichseinrichtung in den Spülraum gelangen kann.

Ferner kann das Adapterelement zumindest eine Haltenut aufweisen, die ausgebildet sein kann, um einen Rand der Entlüftungsöffnung aufzunehmen. Vorteilhafterweise ist die Haltenut zwischen dem Haltearm und einer Krempe ausgeformt und kann ein Verrutschen des Adapterelements in der Entlüftungsöffnung verhindern.

Die Druckausgleichseinrichtung kann gemäß einer Ausführungsform ein Dichtungselement aufweisen, das ausgeformt sein kann, um eine Schnittstelle zwischen der Entlüftungsöffnung und dem Adapterelement abzudichten. Das Dichtungselement kann beispielsweise als ein Dichtungsring realisiert sein, der vorteilshafterweise an der Krempe angeordnet ist. Dadurch kann vorteilhafterweise zusätzlich ein Verrutschen des Adapterelements vermieden werden. Gemäß einer Ausführungsform kann das Ventil ausgeformt sein, um die Luftöffnung und zusätzlich oder alternativ die weitere Luftöffnung zu öffnen, wenn in einem betriebsbereiten Zustand des Reinigungsgeräts ein Innenraumdruck in dem Spülraum größer ist als ein Umgebungsdruck außerhalb des Spülraumes. Das Ventil kann weiterhin ausgeformt sein, um die Luftöffnung und zusätzlich oder alternativ die weitere Luftöffnung zu schließen, wenn der Umgebungsdruck im betriebsbereiten Zustand des Reinigungsgeräts zumindest gleichgroß ist wie der Innenraumdruck. Das bedeutet, dass das Ventil von einer dem Spülraum abgewandten Seite an dem Adapterelement angeordnet ist, sodass vorteilhafterweise bei einem hohen Innenraumdruck Luft aus dem Spülraum in eine Umgebung entweichen kann, um vorteilhafterweise Fehlfunktionen des Reinigungsgeräts zu vermeiden, die auf einen Überdruck innerhalb des Spülraums zurückzuführen sind.

Ferner wird ein Reinigungsgerät vorgestellt, das einen Spülraum mit einer Entlüftungsöffnung aufweist. Dabei ist der Spülraum ausgeformt, um zu reinigendes Reinigungsgut aufzunehmen. Weiterhin weist das Reinigungsgerät eine Druckausgleichseinrichtung in einer der zuvor vorgestellten Varianten auf.

Das Reinigungsgerät kann beispielsweise ausgeformt sein, um Reinigungsgut, wie beispielsweise Wäsche und zusätzlich oder alternativ Geschirr zu reinigen. Die Entlüftungsöffnung kann beispielsweise überschüssige Luft aus dem Spülraum austreten lassen. Vorteilhafterweise kann während einer Trocknungsfunktion verhindert werden, dass beispielsweise Spülflottenreste in den Spülraum gelangen.

Weiterhin wird ein Verfahren zum Herstellen einer Druckausgleichseinrichtung in einer der zuvor vorgestellten Varianten vorgestellt, wobei das Verfahren einen Schritt des Bereitstellens und einen Schritt des Zusammenfügens umfasst. Im Schritt des Bereitstellens werden das Adapterelement und das Ventil bereitgestellt. Im Schritt des Zusammenfügens werden das Adapterelement und das Ventil zusammengefügt, um die Druckausgleichseinrichtung herzustellen.

Der hier vorgestellte Ansatz schafft ferner ein Steuergerät, das ausgebildet ist, um die Schritte einer Variante eines hier vorgestellten Verfahrens in entsprechenden Einrichtungen durchzuführen, anzusteuern bzw. umzusetzen. Auch durch diese Ausführungsvariante der Erfindung in Form eines Steuergeräts kann die der Erfindung zugrundeliegende Aufgabe schnell und effizient gelöst werden.

Das Steuergerät kann ausgebildet sein, um Eingangssignale einzulesen und unter Verwendung der Eingangssignale Ausgangssignale zu bestimmen und bereitzustellen. Ein Eingangssignal kann beispielsweise ein über eine Eingangsschnittstelle des Steuergeräts einlesbares Sensorsignal darstellen. Ein Ausgangssignal kann ein Steuersignal oder ein Datensignal darstellen, das an einer Ausgangsschnittstelle des Steuergeräts bereitgestellt werden kann. Das Steuergerät kann ausgebildet sein, um die Ausgangssignale unter Verwendung einer in Hardware oder Software umgesetzten Verarbeitungsvorschrift zu bestimmen. Beispielsweise kann das Steuergerät dazu eine Logikschaltung, einen integrierten Schaltkreis oder ein Softwaremodul umfassen und beispielsweise als ein diskretes Bauelement realisiert sein oder von einem diskreten Bauelement umfasst sein.

Von Vorteil ist auch ein Computer-Programmprodukt oder Computerprogramm mit Programmcode, der auf einem maschinenlesbaren Träger oder Speichermedium wie einem Halbleiterspeicher, einem Festplattenspeicher oder einem optischen Speicher gespeichert sein kann. Wird das Programmprodukt oder Programm auf einem Computer oder einem Steuergerät ausgeführt, so kann das Programmprodukt oder Programm zur Durchführung, Umsetzung und/oder Ansteuerung der Schritte des Verfahrens nach einer der vorstehend beschriebenen Ausführungsformen verwendet werden.

Der hier beschriebene Ansatz kann entsprechend im Zusammenhang mit einem privaten, gewerblichen oder professionellen Gerät, beispielsweise einem medizinischen Gerät, wie einem Reinigungs- oder Desinfektionsgerät, einem Kleinsterilisator, einem Großraumdesinfektor oder einer Container-Waschanlage eingesetzt werden.

Ein Ausführungsbeispiel der Erfindung ist in den Zeichnungen rein schematisch dargestellt und wird nachfolgend näher beschrieben. Es zeigt
- Figur 1: eine schematische Darstellung eines Reinigungsgeräts mit einer Druckausgleichseinrichtung gemäß einem Ausführungsbeispiel;
- Figur 2: eine Querschnittsdarstellung einer Druckausgleichseinrichtung in einer Ruheposition gemäß einem Ausführungsbeispiel;
- Figur 3: eine Querschnittsdarstellung einer Druckausgleichseinrichtung in einer Öffnungsposition gemäß einem Ausführungsbeispiel;
- Figur 4: eine schematische Seitendarstellung einer Druckausgleichseinrichtung in einer Ruheposition gemäß einem Ausführungsbeispiel;
- Figur 5: eine schematische Darstellung einer Druckausgleichseinrichtung gemäß einem Ausführungsbeispiel;
- Figur 6: eine perspektivische Darstellung einer Druckausgleichseinrichtung gemäß einem Ausführungsbeispiel;
- Figur 7: eine perspektivische Darstellung einer Druckausgleichseinrichtung gemäß einem Ausführungsbeispiel;
- Figur 8: eine perspektivische Darstellung eines Adapterelements und eines Ventils gemäß einem Ausführungsbeispiel;
- Figur 9: eine schematische Darstellung eines Adapterelements gemäß einem Ausführungsbeispiel;
- Figur 10: eine perspektivische Darstellung einer Entlüftungsöffnung in einem Spülraum eines Reinigungsgeräts gemäß einem Ausführungsbeispiel;
- Figur 11: eine perspektivische Darstellung eines Spülraumes eines Reinigungsgeräts gemäß einem Ausführungsbeispiel; und
- Figur 12: ein Ablaufdiagramm eines Verfahrens zum Herstellen einer Druckausgleichseinrichtung gemäß einem Ausführungsbeispiel.

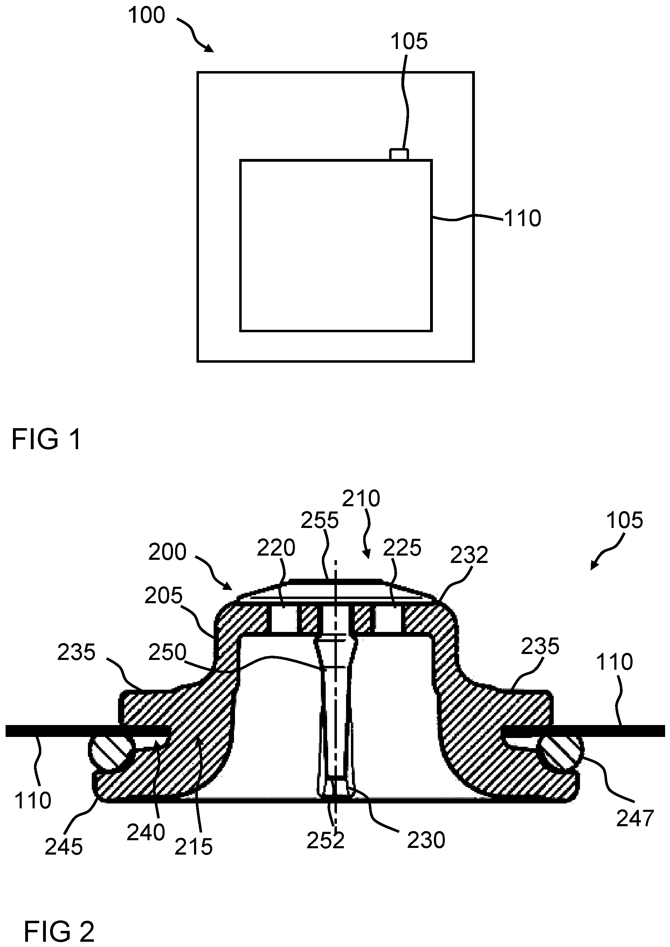

Figur 1 zeigt eine schematische Darstellung eines Reinigungsgeräts 100 mit einer Druckausgleichseinrichtung 105 gemäß einem Ausführungsbeispiel. Das Reinigungsgerät 100 ist gemäß diesem Ausführungsbeispiel ausgeformt, um zu reinigendes Reinigungsgut in einem Spülraum 110 des Reinigungsgeräts 100 zu reinigen. Die Druckausgleichseinrichtung 105, die in den folgenden Figuren genauer beschrieben wird, ist gemäß diesem Ausführungsbeispiel ausgeformt, um einen Druckausgleich in dem Spülraum 110 zu ermöglichen. Dadurch werden gemäß diesem Ausführungsbeispiel Fehlfunktionen des Reinigungsgeräts 100 vermieden. Gemäß diesem Ausführungsbeispiel ist das Reinigungsgerät 100 beispielsweise als Spülmaschine oder als Waschmaschine realisiert. Es ist nicht auszuschließen, dass gemäß einem alternativen Ausführungsbeispiel die hier beschriebene Druckausgleichseinrichtung 105 in einem anderen Gerät realisierbar ist. Gemäß diesem Ausführungsbeispiel weist das hier beschriebene Reinigungsgerät 100 beispielsweise eine Trocknungs- oder Gebläsefunktion auf, für die ein durch die Druckausgleichseinrichtung 105 erfolgender Druckausgleich von Vorteil ist.

In anderen Worten wird gemäß diesem Ausführungsbeispiel eine Druckausgleichseinrichtung 105, die auch als Druckausgleichsvorrichtung bezeichnet werden kann, für ein Reinigungsgerät 100 beschrieben. Bei einem Einsatz von einem Reinigungsgerät 100, wie beispielsweise einem Reinigungsautomat und/oder Spülgerät, kann es Prozessschritte geben, wie beispielsweise Trocknungsvorgänge, in denen definierte Mengen an Luft in den Spülraum 110 des Reinigungsgeräts 100 befördert werden.

In Abhängigkeit von Parametern wie "Einströmende Luftmenge", "Lufttemperatur" und/oder "Restwassermenge" kann es während dieses Vorgangs zu einem erhöhten Spülrauminnendruck kommen, der im Folgenden auch als Innenraumdruck bezeichnet wird. Je nach Bauweise des Spülraumes 110 existieren gemäß diesem Ausführungsbeispiel potentielle Ausgleichsstellen, wie beispielsweise eine Entlüftung über einen Dampfkondensator oder Spülraumüberlauf, die aber in extremen Situationen nicht ausreichen, um beispielsweise Druckspitzen zu kompensieren. Dadurch kommt es in manchen Fällen zu Fehlfunktionen, wie beispielsweise zu einem Austritt von Spülflotteresten über eine verbaute Türdichtung. Vor diesem Hintergrund wird die Druckausgleichseinrichtung 105 vorgestellt, um den Druckausgleich zwischen dem Innenraumdruck und einem Umgebungsdruck einer Spülraumumgebung zu realisieren, der die Gefahr von Fehlfunktionen auf ein Minimum reduziert, wie beispielsweise bei einem ungewollten Austritt der Spülflottenreste während kritischer Prozessschritte des Reinigungsgeräts 100.

Figur 2 zeigt eine Querschnittsdarstellung einer Druckausgleichseinrichtung 105 in einer Ruheposition 200 gemäß einem Ausführungsbeispiel. Bei der Druckausgleichseinrichtung 105 kann es sich um die in Figur 1 beschriebene Druckausgleichseinrichtung 105 handeln, die in einem Reinigungsgerät angeordnet sein kann, wie es in Figur 1 beschrieben wurde. Die Druckausgleichseinrichtung 105 weist dabei ein Adapterelement 205 und ein Ventil 210 auf. Das Adapterelement 205 ist gemäß diesem Ausführungsbeispiel an einer Entlüftungsöffnung 215 eines Spülraumes 110 angeordnet. Gemäß diesem Ausführungsbeispiel weist das Adapterelement 205 zumindest eine Luftöffnung 220 auf, die ausgeformt ist, um einen gasförmigen Stoff, wie beispielsweise Luft durch sich hindurch zu lassen. Das Ventil 210 ist ausgeformt, um die zumindest eine Luftöffnung 220 in einer Öffnungsposition zu öffnen und/oder in der hier gezeigten Ruheposition 200 zu schließen. Gemäß diesem Ausführungsbeispiel ist das Ventil 210 mit dem Adapterelement 205 gekoppelt oder koppelbar, indem das Ventil 210 beispielsweise in das Adapterelement 205 einsteckbar ist. In der Öffnungsposition wird ein Ausströmen von Luft aus den Spülraum 110 ermöglicht, während in der Ruheposition 200 ein Einströmen von Luft in den Spülraum 110 und/oder ein Ausströmen von Luft aus den Spülraum 110 verhindert wird.

Optional weist das Adapterelement 205 gemäß diesem Ausführungsbeispiel weiterhin zumindest eine weitere Luftöffnung 225 auf. Das bedeutet, dass das Ventil 210 ausgeformt ist, um ebenfalls die zumindest eine weitere Luftöffnung 225 in der Öffnungsposition zu öffnen und/oder in der Ruheposition 200 zu schließen. Die Luftöffnung 220 und/oder die weitere Luftöffnung 225 sind dabei gemäß diesem Ausführungsbeispiel radial um eine Montageöffnung 230 des Adapterelements 205 angeordnet, was in einer der nachfolgenden Figuren genauer beschrieben ist. Die Montageöffnung 230 ist gemäß diesem Ausführungsbeispiel ausgebildet, um das Ventil 210 aufzunehmen und ist dabei beispielsweise kanalförmig ausgeformt.

Das Adapterelement 205 ist gemäß diesem Ausführungsbeispiel wannenförmig ausgeformt. Das bedeutet, dass eine Vertiefung des Adapterelements 205 mit einem Wannenboden 232 in eine dem Spülraum 110 abgewandte Richtung gewölbt ist. Gemäß diesem Ausführungsbeispiel erstreckt sich die Montageöffnung 230 mittig durch den Wannenboden 232 und/oder durch eine sich an den Wannenboden 232 anschließende Führungshülse des Adapterelements 205 hindurch. Das Adapterelement 205 weist weiterhin optional gemäß diesem Ausführungsbeispiel zumindest einen Haltearm 235 auf, der ausgebildet ist, um das Adapterelement 205 an der Entlüftungsöffnung 215 zu halten. Der zumindest eine Haltearm 235 ist dabei gemäß diesem Ausführungsbeispiel an einer Wannenwand angeordnet, die den Haltearm 235 und den Wannenboden 232 miteinander verbindet. Dem entsprechend sind die Luftöffnungen 220, 225 an einer anderen Seite des Adapterelements 205 angeordnet als der zumindest eine Haltearm 235. Das Adapterelement 205 weist weiterhin eine zu dem Haltearm 235 parallel ausgerichtete Haltenut 240 auf, die ausgebildet ist, um einen Rand der Entlüftungsöffnung 215 aufzunehmen. Das bedeutet, dass beispielsweise die Haltenut 240 zwischen dem Haltearm 235 und einer Krempe 245 des Adapterelements 205 angeordnet ist. Sowohl die Krempe 245 als auch der Haltearm 235 sind optional an dem Adapterelement 205 umlaufend angeordnet oder anordenbar. Auch umlaufend an dem Adapterelement 205 angeordnet und somit Teil der Druckausgleichseinrichtung 105 ist gemäß diesem Ausführungsbeispiel ein Dichtungselement 247, das ausgeformt ist, um eine Schnittstelle zwischen der Entlüftungsöffnung 215 und dem Adapterelement 205 abzudichten. Das Dichtungselement 247 ist gemäß diesem Ausführungsbeispiel als Dichtungsring realisiert. Der Dichtungsring ist gemäß diesem Ausführungsbeispiel zwischen dem Rand und der Krempe 245 eingespannt.

Gemäß diesem Ausführungsbeispiel weist das Ventil 210 ein Anschlusselement 250 auf, das in die Montageöffnung 230 einsteckbar ausgeformt ist. Das Anschlusselement 250 ist gemäß diesem Ausführungsbeispiel stabförmig, sich in Richtung eines freien Endes 252 verjüngend ausgeformt und weist an einem dem freien Ende 252 gegenüberliegendes Ende ein Abdeckelement 255 auf. Das Abdeckelement 255 ist gemäß diesem Ausführungsbeispiel ausgeformt, um in der Ruheposition 200 des Ventils 210 die Luftöffnung 220 und/oder die weitere Luftöffnung 225 abzudecken und/oder in der Öffnungsposition des Ventils 210 die Luftöffnung 220 und/oder die weitere Luftöffnung 225 zu öffnen. Das Abdeckelement 255 des Ventils 210 ist gemäß diesem Ausführungsbeispiel elastisch ausgeformt, sodass beispielsweise durch Umstülpen des Abdeckelements 255 das Ventil 210 geöffnet wird, das beispielsweise als ein so genanntes Umbrella-Ventil realisierbar ist. Das Abdeckelement 255 ist dabei beispielsweise tellerförmig realisiert. Gemäß einem alternativen Ausführungsbeispiel ist das Abdeckelement 255 beispielsweise starr und das Anschlusselement 250 elastisch ausgeformt. Die Luftöffnung 220 und/oder weitere Luftöffnung 225 erstrecken sich gemäß diesem Ausführungsbeispiel benachbart zu der Montageöffnung 230 durch den Wannenboden 232 hindurch. Zwischen dem freien Ende 252 und dem gegenüberliegenden Ende weist das Anschlusselement 250 eine Verdickung auf, die an einer dem Abdeckelement 255 gegenüberliegenden Seite des Wannenboden 232 an dem Wannenboden 232 anliegt.

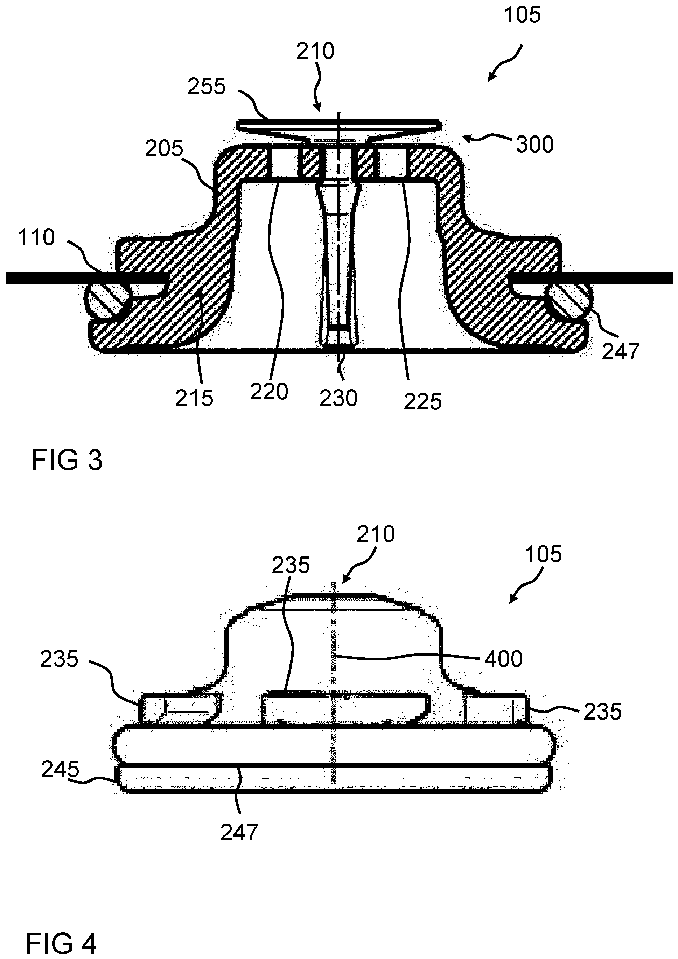

Figur 3 zeigt eine Querschnittsdarstellung einer Druckausgleichseinrichtung 105 in einer Öffnungsposition 300 gemäß einem Ausführungsbeispiel. Die hier gezeigte Druckausgleichseinrichtung 105 kann der in Figur 2 beschriebenen Druckausgleichseinrichtung 105 entsprechen und ist in einem Reinigungsgerät realisierbar, wie es in Figur 1 beschrieben wurde. Lediglich die Position des Ventils 210 weicht von dem in Figur 2 beschriebenen Ventil 210 insofern ab, dass gemäß diesem Ausführungsbeispiel das Ventil 210 in der Öffnungsposition 300 realisiert ist. Das bedeutet, dass das Abdeckelement 255 gemäß diesem Ausführungsbeispiel in eine von dem Spülraum 110 abgewandte Richtung umgestülpt ist. Gemäß diesem Ausführungsbeispiel ist in der Öffnungsposition 300 ein umlaufender Tellerrand des tellerförmigen Abdeckelements 255 in die von dem Spülraum 110 abgewandte Richtung umgestülpt angeordnet. Gemäß diesem Ausführungsbeispiel ist auch hier das Ventil 210 ausgeformt, um die Luftöffnung 220 und/oder die weitere Luftöffnung 225 zu öffnen, wenn in einem betriebsbereitem Zustand des Reinigungsgeräts ein Innenraumdruck in dem Spülraum 110 größer ist als ein Umgebungsdruck außerhalb des Spülraumes110. Weiterhin ist das Ventil 210 auch hier ausgeformt, um die Luftöffnung 220, 225 zu schließen, wenn der Umgebungsdruck im betriebsbereitem Zustand des Reinigungsgeräts zumindest gleichgroß ist wie der Innenraumdruck.

In anderen Worten wird durch den hier vorgestellten Ansatz ein Druckausgleich beispielsweise bei Anlaufvorgängen von Gebläsen für Trocknungsvorgänge innerhalb eines Aufbereitungsprozesses oder Reinigungs- und Trocknungszyklus ermöglicht, ohne dass in Spülphasen undefinierte Luftmengen samt hoher relativer Luftfeuchtigkeit aus dem Spülraum 110 austreten. Ein ungewolltes Eindringen von Partikeln wird ebenfalls verhindert.

Im Spülraum 110 ist eine Öffnung, die auch als Entlüftungsöffnung 215 bezeichnet wird, vorgesehen, in der das Ventil 210 entweder direkt in den Spülraum 110 oder durch die Verwendung eines Adapterstückes, das hier als Adapterelement 205 bezeichnet wird, samt Dichtungselement 247 im Spülraum 110 eingesetzt wird. Je nach Ausprägungen sind um die Montageöffnung 230 des Ventils 210 weitere Öffnungen, beispielsweise die Luftöffnungen 220, 225, in dem Adapterelement 205 oder direkt im Spülraum 110 angeordnet. Während regulärer Spülschritte ist das Ventil 210 in der Ruheposition angeordnet. In diesem Fall ist ein Druckniveau in einem Inneren des Spülraumes 110, das bedeutet der Innenraumdruck, mit dem Druckniveau außerhalb des Spülraumes 110, das bedeutet mit dem Umgebungsdruck, vergleichbar. Das Ventil 210 bleibt dabei geschlossen und verschließt somit auch die Luftöffnungen 220, 225, die auch als Austrittsöffnungen bezeichnet werden können. Sobald es zu einem erhöhten Innenraumdruck kommt, gibt das Ventil 210 die Luftöffnungen 220, 225 frei und ermöglicht über beispielsweise einen Volumenstrom den Ausgleich beider Druckniveaus. Dadurch kann beispielsweise vermieden werden, dass in undefiniertem Maße und zu jeder Zeit Feuchtigkeit beispielsweise in Form von Dampfwrasen oder Restfeuchtigkeit in der Luft zu Beginn eines Trocknungsvorganges aus dem Spülraum 110 entweicht. Zudem wird gemäß diesem Ausführungsbeispiel vermieden, dass Partikel von außerhalb des Spülraums 110 in selbigen eindringen, was je nach Einsatzgebiet des Reinigungsgeräts kritisch sein kann. Weiterhin wird vermieden, dass es zu erhöhtem Innenraumdruck und folglich zu Fehlfunktionen des Reinigungsgeräts kommt.

Figur 4 zeigt eine schematische Seitendarstellung einer Druckausgleichseinrichtung 105 in einer Ruheposition gemäß einem Ausführungsbeispiel. Die hier dargestellte Druckausgleichseinrichtung 105 kann einer der in den Figuren 2 und 3 beschriebenen Druckausgleichseinrichtung 105 entsprechen und ist somit in einem Reinigungsgerät einsetzbar, wie es in Figur 1 beschrieben wurde. Gemäß diesem Ausführungsbeispiel ist ersichtlich, dass die Druckausgleichseinrichtung 105 eine Mehrzahl von Haltearmen 235 und parallel dazu die Krempe 245 aufweist und das Dichtungselement 247 zwischen den Haltearmen 235 und der Krempe 245 angeordnet ist. Die Krempe 247 ist dabei gemäß diesem Ausführungsbeispiel durchgängig umlaufend ausgeformt. Gemäß diesem Ausführungsbeispiel ist das Ventil 210 der Druckausgleichseinrichtung 105 auf einer zentral durch das Adapterelement 205 verlaufenden Längsachse 400 angeordnet.

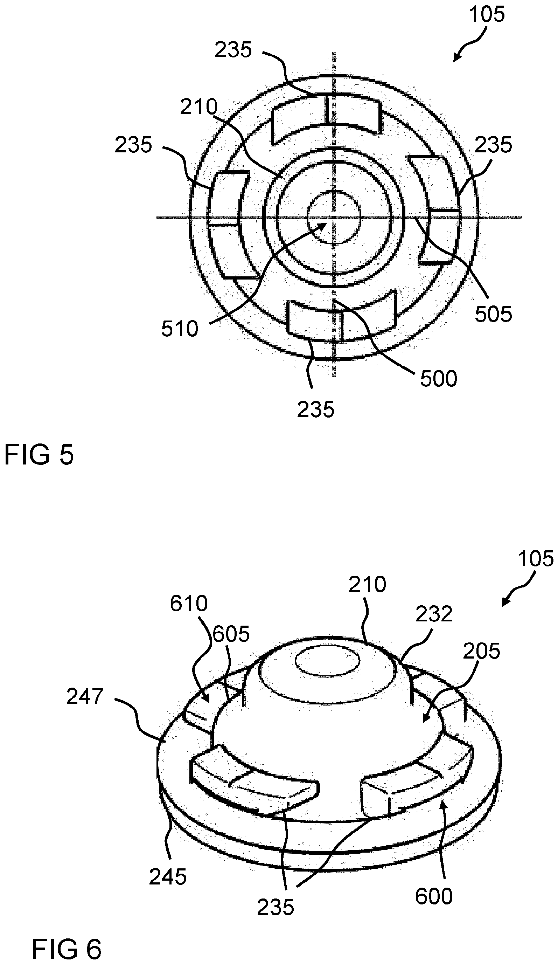

Figur 5 zeigt eine schematische Darstellung einer Druckausgleichseinrichtung 105 gemäß einem Ausführungsbeispiel. Die hier dargestellte Druckausgleichseinrichtung 105 kann einer der in den Figuren 2 bis 4 beschriebenen Druckausgleichseinrichtung 105 entsprechen und ist somit in einem Reinigungsgerät einsetzbar, wie es in Figur 1 beschrieben wurde. Abweichend ist lediglich die Darstellungsperspektive, sodass die Druckausgleichseinrichtung 105 gemäß diesem Ausführungsbeispiel in einer Vogelperspektive dargestellt ist. Gemäß diesem Ausführungsbeispiel sind die beispielhaft vier Haltearme 235 radial um das Ventil angeordnet, das wiederum mittig an der Druckausgleichseinrichtung 105 angeordnet ist. Gemäß diesem Ausführungsbeispiel liegen die Haltearme 235 auf zwei sich in einem zentralen Punkt 510 der Druckausgleichseinrichtung 105 schneidenden Achsen 500, 505, die gemäß diesem Ausführungsbeispiel senkrecht zueinander ausgerichtet sind. Gemäß einem alternativen Ausführungsbeispiel ist eine höhere Anzahl von Haltearmen 235 als hier gezeigt realisierbar, sodass auch eine Anzahl von Haltepunkten der Druckausgleichseinrichtung 105 steigt.

Figur 6 zeigt eine perspektivische Darstellung einer Druckausgleichseinrichtung 105 gemäß einem Ausführungsbeispiel. Die hier dargestellte Druckausgleichseinrichtung 105 kann einer der in den Figuren 2 bis 5 beschriebenen Druckausgleichseinrichtung 105 entsprechen und ist somit in einem Reinigungsgerät einsetzbar, wie es in Figur 1 beschrieben wurde. Gemäß diesem Ausführungsbeispiel weist der Haltearm 235 auf einer dem Dichtungselement 247 zugewandten Seite eine Einkerbung 600 auf, die beispielsweise ausgebildet ist, um bei einem Einsetzen der Druckausgleichseinrichtung 105 in die Entlüftungsöffnung fixiert werden zu können. Das bedeutet, dass in diesem Fall beispielsweise ein sich an der Entlüftungsöffnung befindender Zahn in die Einkerbung 600 einrastet und auf diese Weise die Druckausgleichseinrichtung 105 an der Entlüftungsöffnung fixierbar ist. Gemäß diesem Ausführungsbeispiel weist das Adapterelement 205 von der Krempe 245 ausgehend in Richtung des Ventils verschiedene Ebenen auf, die stufenförmig kleiner werdend verlaufen. Die Stufenkanten sind gemäß diesem Ausführungsbeispiel dabei abgerundet realisiert und/oder realisierbar. Eine erste Ebene entspricht dabei einer Auflagefläche auf der Krempe 245, auf der das Dichtungselement 247 angeordnet ist. Eine zweite Ebene 605 ist gemäß diesem Ausführungsbeispiel auf Höhe einer zu dem Ventil 210 zugewandten Fläche 610 des zumindest einen Haltearms 235 angeordnet, sodass die Fläche 610 gemäß diesem Ausführungsbeispiel in die zweite Ebene 605 übergeht. Eine dritte Ebene entspricht gemäß diesem Ausführungsbeispiel dem Wannenboden 232 und ist somit als Auflagefläche für das Ventil 210 realisiert.

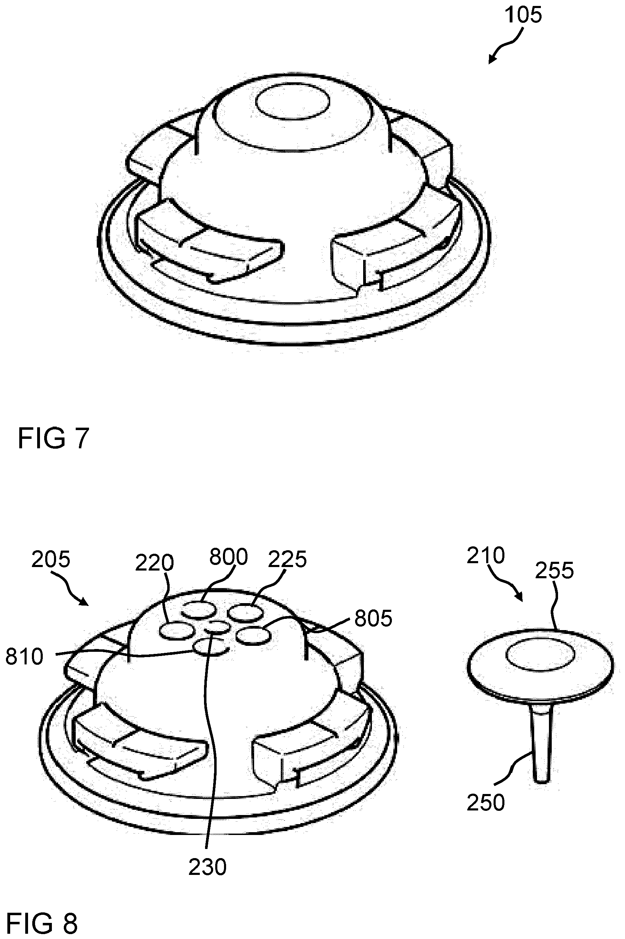

Figur 7 zeigt eine perspektivische Darstellung einer Druckausgleichseinrichtung 105 gemäß einem Ausführungsbeispiel. Die hier gezeigte Druckausgleichseinrichtung 105 kann der in Figur 6 beschriebenen Druckausgleichseinrichtung 105 entsprechen und ist somit in einem Reinigungsgerät einsetzbar, wie es in Figur 1 beschrieben wurde. Die Druckausgleichseinrichtung 105 ist gemäß diesem Ausführungsbeispiel lediglich ohne das Dichtungselement abgebildet.

Figur 8 zeigt eine perspektivische Darstellung eines Adapterelements 205 und eines Ventils 210 gemäß einem Ausführungsbeispiel. Das hier dargestellte Adapterelement 205 und Ventil 210 können gemäß diesem Ausführungsbeispiel der in Figur 7 beschriebenen Druckausgleichseinrichtung in demontiertem Zustand entsprechen. Gemäß diesem Ausführungsbeispiel weist das Adapterelement 205 die Luftöffnung 220, die weitere Luftöffnung 225 sowie weiterhin eine dritte Luftöffnung 800, eine vierte Luftöffnung 805 und/oder eine fünfte Luftöffnung 810 auf. Die Luftöffnungen 220, 225, 800, 805, 810 sind gemäß diesem Ausführungsbeispiel radial um die Montageöffnung 230 angeordnet.

Das Ventil 210 ist gemäß diesem Ausführungsbeispiel nagelförmig realisiert. Das bedeutet, dass das Anschlusselement 250 auch gemäß diesem Ausführungsbeispiel stabförmig realisiert ist und das Abdeckelement 255 wie zuvor schon beschrieben tellerförmig realisiert ist.

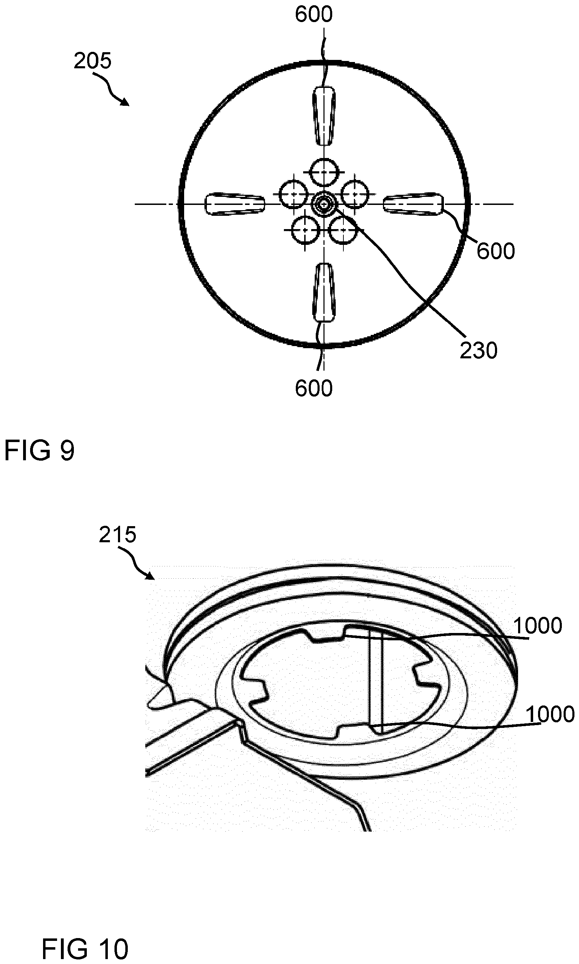

Figur 9 zeigt eine schematische Darstellung eines Adapterelements 205 gemäß einem Ausführungsbeispiel. Das hier gezeigte Adapterelement 205 kann dem in Figur 8 beschriebenen Adapterelement 205 entsprechen. Abweichend ist lediglich die Perspektive, die gemäß diesem Ausführungsbeispiel die Vogelperspektive ist. Gemäß diesem Ausführungsbeispiel ist eine Mehrzahl von Einkerbungen 600 radial zu der Montageöffnung 230 angeordnet, wie auch die hier nicht dargestellten Haltearme. Die Einkerbungen 600 sind gemäß einem Ausführungsbeispiel unterhalb der Haltearme realisierbar.

Figur 10 zeigt eine perspektivische Darstellung einer Entlüftungsöffnung 215 in einem Spülraum 110 eines Reinigungsgeräts gemäß einem Ausführungsbeispiel. Die Entlüftungsöffnung 215 kann dabei einer der in den Figuren 2 bis 3 genannten Entlüftungsöffnung 215 entsprechen und ist gemäß diesem Ausführungsbeispiel in einem Reinigungsgerät angeordnet, wie es in Figur 1 beschrieben wurde. Die Entlüftungsöffnung 215 ist gemäß diesem Ausführungsbeispiel als eine runde Durchgangsöffnung realisiert, die eine Mehrzahl von Zähnen 1000 aufweist. Dabei sind gemäß diesem Ausführungsbeispiel jeweils zwei der beispielhaft vier Zähne 1000 an jeweils gegenüberliegenden Seiten der Entlüftungsöffnung 215 angeordnet. Mittels der Zähne 1000 kann gemäß diesem Ausführungsbeispiel die Druckausgleichseinrichtung eingesetzt und anschließend durch beispielsweise Drehen fixiert werden, da die Zähne 1000 in die Haltenut am Adapterelement greifen. Optional können die Zähne 1000 in den zuvor beschriebenen Einkerbungen einrasten.

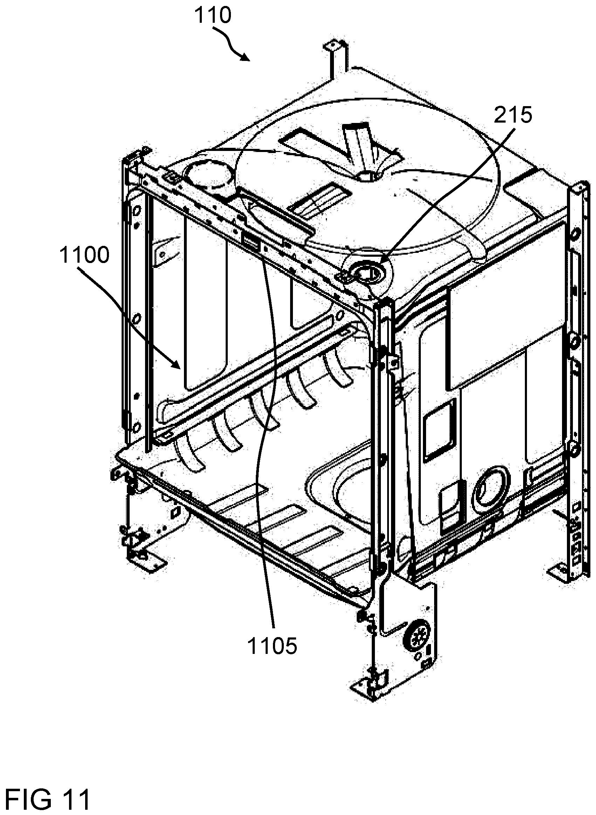

Figur 11 zeigt eine perspektivische Darstellung eines Spülraumes 110 eines Reinigungsgeräts gemäß einem Ausführungsbeispiel. Der hier dargestellte Spülraum 110 ist gemäß diesem Ausführungsbeispiel ohne Gehäuse und/oder Geräteelektronik gezeigt. Der Spülraum 110 ist gemäß diesem Ausführungsbeispiel für ein Reinigungsgerät verwendbar, wie es in Figur 1 beschrieben wurde. Der Spülraum 110 weist gemäß diesem Ausführungsbeispiel die Entlüftungsöffnung 215 auf, die der in Figur 10 beschriebenen Entlüftungsöffnung 215 entsprechen kann. Gemäß diesem Ausführungsbeispiel ist die Entlüftungsöffnung 215 an einer Beladeseite 1100 des Spülraumes 110 angrenzenden Kante 1105 angeordnet.

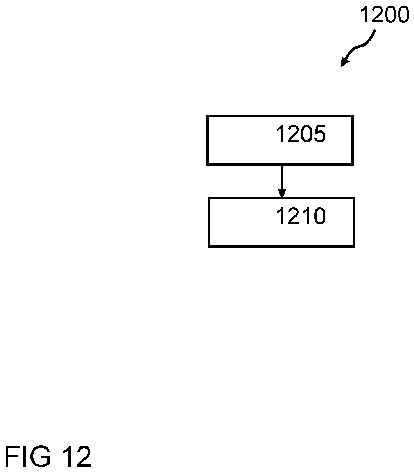

Figur 12 zeigt ein Ablaufdiagramm eines Verfahrens 1200 zum Herstellen einer Druckausgleichseinrichtung gemäß einem Ausführungsbeispiel. Das Verfahren 1200 umfasst einen Schritt 1205 des Bereitstellens und einen Schritt 1210 des Zusammenfügens. Im Schritt 1205 des Bereitstellens werden das Adapterelement und das Ventil bereitgestellt. Im Schritt 1210 des Zusammenfügens werden das Adapterelement und das Ventil zusammengefügt, um die Druckausgleichseinrichtung herzustellen.

## Patentansprüche

1. Druckausgleichseinrichtung (105) für ein Reinigungsgerät (100), wobei die Druckausgleicheinrichtung (105) die folgenden Merkmale aufweist:
- ein Adapterelement (205) mit zumindest einer Luftöffnung (220), wobei das Adapterelement (205) in eine Entlüftungsöffnung (215) eines Spülraumes (110) des Reinigungsgeräts (100) eingesetzt oder einsetzbar ist; und
- ein Ventil (210), das mit dem Adapterelement (205) gekoppelt oder koppelbar ist, und ausgeformt ist, um die zumindest eine Luftöffnung (220) in einer Öffnungsposition (300) zu öffnen und/oder in einer Ruheposition (200) zu schließen.

2. Druckausgleichseinrichtung (105) gemäß Anspruch 1, wobei das Adapterelement (205) eine Montageöffnung (230) aufweist, die ausgebildet ist, um das Ventil (210) aufzunehmen.

3. Druckausgleichseinrichtung (105) gemäß Anspruch 2, wobei das Ventil (210) ein Anschlusselement (250) aufweist, das in die Montageöffnung (230) einsteckbar ausgeformt ist, und/oder wobei das Ventil (210) ein Abdeckelement (255) aufweist, das ausgeformt ist, um in der Ruheposition (200) des Ventils (210) die Luftöffnung (220) abzudecken und/oder in der Öffnungsposition (300) des Ventils (210) die Luftöffnung (220) zu öffnen.

4. Druckausgleichseinrichtung (105) gemäß Anspruch 3, wobei das Abdeckelement (255) des Ventils (210) elastisch ausgeformt ist.

5. Druckausgleichseinrichtung (105) gemäß einem der vorangegangenen Ansprüche, wobei das Adapterelement (205) wannenförmig ausgeformt ist.

6. Druckausgleichseinrichtung (105) gemäß einem der vorangegangenen Ansprüche, wobei das Adapterelement (205) zumindest eine weitere Luftöffnung (225) aufweist, wobei das Ventil (210) ausgeformt ist, um die zumindest eine weitere Luftöffnung (225) in der Öffnungsposition (300) zu öffnen und/oder in der Ruheposition (200) zu schließen.

7. Druckausgleichseinrichtung (105) gemäß einem der vorangegangenen Ansprüche, wobei das Adapterelement (205) zumindest einen Haltearm (235) aufweist, der ausgebildet ist, um das Adapterelement (205) an der Entlüftungsöffnung (215) zu halten.

8. Druckausgleichseinrichtung (105) gemäß einem der vorangegangenen Ansprüche, wobei das Adapterelement (205) zumindest eine Haltenut (240) aufweist, die ausgebildet ist, um einen Rand der Entlüftungsöffnung (215) aufzunehmen.

9. Druckausgleichseinrichtung (105) gemäß einem der vorangegangenen Ansprüche, mit einem Dichtungselement (247), das ausgeformt ist, um eine Schnittstelle zwischen der Entlüftungsöffnung (215) und dem Adapterelement (205) abzudichten.

10. Druckausgleichseinrichtung (105) gemäß einem der vorangegangenen Ansprüche, wobei das Ventil (210) ausgeformt ist, um die Luftöffnung (220) und/oder die weitere Luftöffnung (225) zu öffnen, wenn in einem betriebsbereiten Zustand des Reinigungsgeräts (100) ein Innenraumdruck in dem Spülraum (110) größer ist als ein Umgebungsdruck außerhalb des Spülraumes (110), und wobei das Ventil (210) ausgeformt ist, um die Luftöffnung (220) und/oder die weitere Luftöffnung (225) zu schließen, wenn der Umgebungsdruck im betriebsbereiten Zustand des Reinigungsgeräts (100) zumindest gleichgroß ist wie der Innenraumdruck.

11. Reinigungsgerät (100), das die folgenden Merkmale aufweist:
- einen Spülraum (110) mit einer Entlüftungsöffnung (215), wobei der Spülraum (110) ausgeformt ist, um zu reinigendes Reinigungsgut aufzunehmen; und
- eine Druckausgleichseinrichtung (105) gemäß einem der vorangegangenen Ansprüche.
